# EUROPEAN PATENT APPLICATION

(11) **EP 0 626 629 A2**
(43) Date of publication of application: **30.11.1994**
(21) Application number: 94500091.7
(22) Date of filing: 25.05.1994
(51) Int. Cl.: G05D 11/16

(54) **Control and programming unit for hot water installations**

(30) Priority: 26.05.1993 ES 9301140
(71) Applicant: Eiguren Mendiguren, Santiago, E-48014 BILBAO (ES)
(72) Inventor: Eiguren Mendiguren, Santiago, E-48014 BILBAO (ES)
(74) Representative: Urteaga Simarro, José Antonio

(57) **Abstract**

A unit used for controlling and programming hot water installations that combines one single circuit or primary circuit for energy in the form of hot water with a series of substations (16) located outside each household (12), which has one microprocessor card (17) in the boiler room (22), another (18) in each substation and another in each household, which control and measure the different parameters inside the household.

## Description

This invention relates to installations for distributing hot water in a closed circuit to be arranged in blocks of houses or offices as primary energy for different uses inside these places and more specifically to the arrangement of the different elements inside a module, a substation, in order to provide the different services.

This closed circuit, which will henceforth be called primary circuit, consists of one or more boilers that provide the necessary heat to this circuit and of a series of units, one for each household or office, for the production and control of hot water for sanitary purposes, central heating, etc., which will henceforth be called substation, and which is fed by the primary circuit.

Installations are already known which, to a certain extent, include some of the characteristics mentioned. However, they are limited in their operativity and in the control of the installation as a whole, taking into account the different components that make up the substations and the other items.

One object of the present invention is to provide an installation composed of one single hydraulic circuit which allows energy to be provided, in the form of hot water, to each household or office for use in central heating, hot water, sanitary fittings and any other accessories where its use is needed, with total independence of the other users and the timetable of operation.

Another object of the invention is an installation which uses a single meter to record the energy consumption of the user and helps to carry out a rational distribution of costs, by providing a breackdown of individual consumptions and overall consumptions common to all the households or offices.

Another object of the invention is an installation with an individual control for the production temperature of sanitary hot water.

Another object of the invention is to provide an installation provided with a system of microprocessors used for controlling temperatures and consumptions which allows each user, from the inside of each household, to control his consumptions of water and energy, to control the timetable of operation of each service, temperatures, etc., by means of a microprocessed card situated in each of the substations, passing all the data to a master-card located in the boiler room, which in turn controls the operation of the boilers.

To achieve these objectives, the invention proposes an assembly made up of at least one boiler for producing the hot water, which is responsible for providing the primary circuit with the energy needed to be transmitted to the substations for each household. Each one of the substations is connected to the delivery and return pipes of the primary circuit, as well as the sanitary cold water supply.

From each of the substations, the supply of water from the primary circuit is made to reach the interior of each household for the purpose which is of interest, according to needs.

In the boiler room there is a microprocessor which, on the one hand, controls the circulation of the water in the primary circuit within set temperature limits, by acting on the stepped setting of the boilers. This microprocessor or master-card has a mechanism to communicate with all the microprocessed cards in the substations from which it periodically receives information about consumption of energy and water, as well as about the condition of general operation. Furthermore, each card in the substations also has an interface with the interior of each household, composed of a keyboard and a screen.

The substation is usually situated outside each household and is composed of a heat interchanger, as well as a series of valves and strategically distributed sensors. It supplies the services of central heating and sanitary hot water at the temperatures determined by each user and measures the energy and the sanitary water consumed in each household and is communicated in turn, by means of a card, to the master-card in the boiler room so that it can send information about consumptions levels, while at the same time carrying out several maintenance actions, such as the intake temperature of the primary water, the output temperature of the primary water, the flow in the central heating circuit, the flow in the sanitary cold water circuit, the temperature of the sanitary hot water, .... and the state of operation of each of the services.

In this turn, it also has an interface with the user, composed of a screen and a keyboard.

Each substation has, as was mentioned earlier, a heat interchanger, one volumeter for the primary circuit, another volumeter for sanitary water, a proportional motor-operated valve, a series of strategically located temperature sensors or probes and a motor-operated all-or-nothing (on/off) valve, all of which are connected to the electronic card of the said substation.

The following basic functions, among others, will be carried out by each substation:
- Programming the operation timetable of the central heating.
- Supplying the central heating and sanitary hot water service to each household.
- Controlling the temperature of production of the sanitary hot water.
- Indicating and causing the different methods of switching on and off.
- Establishing service priorities.
- Programming the temperature desired in the household.
- Recording the consumption levels of energy and sanitary water.
- Communicating with the boiler room in order to inform it of consumption levels and, in turn, receiving orders from the boiler room to carry our maintenance operations.
- Communicating with the household, in which a visible unit is situated with a screen and a keyboard.

The card in the substation includes a series of general items which are logically not the object of the present invention, although the following are worth mentioning:
- Analogue intakes from the temperature sensors.
- Digital intakes from the volumeters.
- A signal for controlling the sanitary hot water sensor.
- An interface with the screen-keyboard unit inside the household.
- An interface with the master-card in the boiler room.

The screen-keyboard unit inside the household has a set of keys and a screen, from which the user can programme different functions, such as setting temperatures, for example, and at the same time can disply expenses, consuptions levels, operation timetable in daily, weekly or yearly cycles, etc., in terms of the greater or lesser complexity of the electronic assembly that it jointly forms, together with the card in the substation and the master-card in the boiler room. In the same way, as will be explained later, it can also be made to include several alarm signals.

The master-card in the boiler room carries out the following functions:
- Controlling the operation of the boilers.
- Controlling the temperature of the gases.
- Detecting failures and alarms in pumps and burners.
- Controlling the water pressure.
- Controlling the pressure of the fuel supply.
- Controlling the temperature of the primary water.
- Regulating the stepped operation of the boilers.
- Different methods of programming the switching on and off.
- Presenting consumption discharges in the households.
- Carrying out maintenance function in the households and substations.
- Recording fuel consumption.
- Communicating with a compatible computer capable of replacing the screen and keyboard and being able to make available graphic information, telephonic modem, etc.

Among the characteristic items which are included, apart from other general ones that are not taken into consideration in this specification, we can mention the following:
- Communication with the keyboard-screen in the interior of the household.
- Interface with the card in each substation.
- Analogue intakes for temperature sensors, for example for boiler gases, outside temperature, return temperature of the primary circuit, and pressure sensor for water in the primary circuit.
- Digital intakes for volumeters for water and fuel, all-or-nothing pressure detector for fuel, boiler burner flow and operation detectors.
- Outlet for operating the relays for the boiler burners and pumps.
- Connection to the compatible computer.

Once that this master-card for the boiler room has been programmed for the functions described, its connection to the cards in the substations is carried out. The card in each substation is responsible for carrying out the control of all the variables in each household and to this effect it sends the necessary signals to the master-card in the boiler room so that this can act in the appropriate way.

At the same time, the card in each substation can receive instructions from the keyboard-screen in the interior of the household in order to carry out corrections, measurements, etc., while in turn sending the corresponding signals to the master-card.

The micropressed cards might even become used to provide several alarm signals for the households, with which the usefulness of the unit would be increased with this new incorporation.

The master-card in the boiler room can be operated either by a keyboard-screen unit from which it receives its general programming, or by a computer with a keyboard which is in turn connected to a remote control centre equipped with a printer.

Summing up therefore what has been explained, we wish to point out that this invention introduces this combination of electronic items, connected to each other and to different items in the installation, together with the existence of one single primary circuit for energy in the form of hot water.

The accompanying sheet of drawings shows one, non-restrictive solution of the invention, which shows a general diagram with the boiler room (22), the substation (16) and the household (12).

Looking now at the boiler room, we can see the central or main boiler (1), with the delivery (3) and return (4) pipes, as well as the pump (2) that drives the hot water towards each one of the substations and the two sensors (25, 24).

Illustrated at the bottom of the diagram are the master-card (17) in the boiler room, the card (18) in the substation and the keyboard-screen (19) inside the house, equipped with a microprocessor. These three items are connected to each other by means of the interfaces (20, 21).

The intake of water (3) towards the substation (16) passes through the temperature sensor (6) towards the proportional motor-operated valve (8) and to the heat interchanger (5), where another temperature sensor (10) can also be seen. From the interchanger, one outlet for sanitary hot water (13) can be appreciated, as well as another outlet for cold water through the meter (15).

From the hot water intake, a derivation arrives to the motor-operated all-or-nothing valve (9) and so to the central heating circuit (14). The return water outlets from the household, both the two shown and any others for other uses, pass through the volumeter with challenger in the primary circuit (11) and sensor (7) moving towards the return pipe (4), passing through the temperature sensor (24) towards the boiler (1).

The sensors (6, 7, 10) are connected with the card (18), as are the valves (8, 9) and the volumeters (11, 15), as well as any other kind of supplementary items that the installation might require. In this particular case, the volume of water in the primary circuit that has circulated through the substation is measured (metered), together with the difference in temperature between the intake and the outlet.

The card (18) allows the information received to be sent back to the master-card (17) and at the same time receive information coming from the microprocessor (19) when it is programmed from inside the house (12).

Once in operation and with the master-card (17) in the boiler room properly programmed, the card (18) controls the parameters that have been set for it from inside the household, such as consumption levels; it memorizes this information and sends it to the master-card (17) in the boiler room.

Each one of the substations (16) can incorporate other outlets from the primary circuit to the household for any other purposes which might be desired, e.g. for heating hot water for domestic appliances in their different operating cycles.

The screen-keyboard (19) can include, in combination with cards (17) and (18), any kind of control of other functions, which can be carried out by making the necessary extensions.

This microprocessor (17) in the boiler room can be connected with a screen-keyboard (25) from which it receives the corresponding programming orders, but also, as an alternative, it can be connected with the computer (26), also provided with the corresponding keyboard, which in turn and by means of the line (27), reaches a remote control centre (28), which can programme, display on screen, offer graphics, etc. of the results which are being obtained.

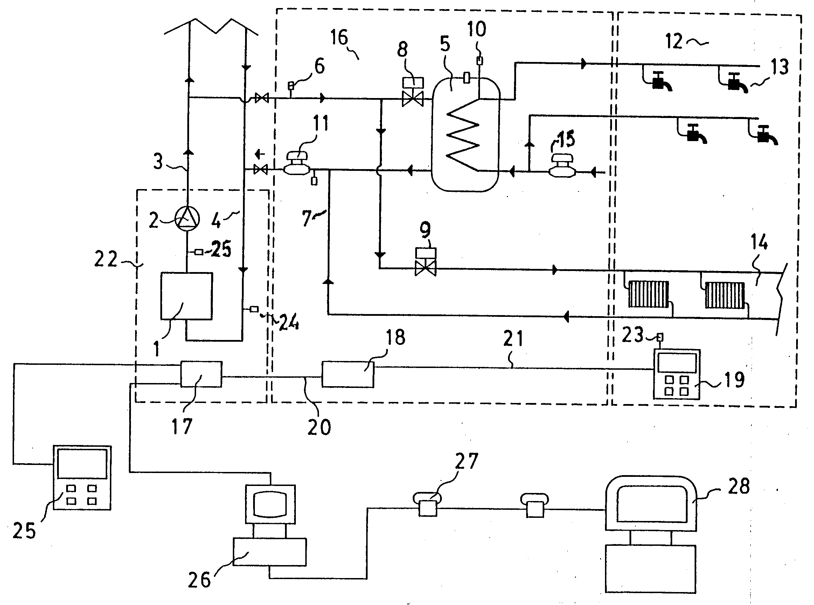

## Claims

**1.-** Control and programming unit for hot water installations, of the type which have at least one boiler (1) for producing the said hot water, a number of substations (16), one for each household, each of which includes a heat interchanger (5), temperature sensors (6, 10), several valves, meters, etc., which is characterized by the combination of a single primary circuit for hot water, provided with a delivery pipe (3) towards each substation (16), a water intake from each of them towards the interior of each household and a return pipe (4) towards the boiler (1), with an electronic device composed of a master-card (17) located in the boiler room, another card (18) located in each of the substations and another card situated inside each household, in that the master-card (17) controls the variables in the boiler room and the card (18) in each substation controls the temperature parameters, valves, volumeters, etc., included in the substation, in that this card in the substation is connected with the one inside the household, which allows the said parameters to be set from inside the household, and in that the card in the substation transmits all the information to the master-card in the boiler room.

**2.-** Control and programming unit for hot water installations, in accordance with claim 1, characterized in that the master-card (17) in the boiler room is connected with another card, from which programming of the master-card is carried out.

**3.-** Control and programming unit for hot water installations, in accordance with claim 1, characterized in that the master-card (17) in the boiler room is connected to a computer (26) with a keyboard and this, in turn, to a remote control centre (28).
